# EUROPÄISCHE PATENTSCHRIFT

(11) **EP 2 089 261 B1**
(45) Veröffentlichungstag und Bekanntmachung des Hinweises auf die Patenterteilung: **08.08.2012**
(21) Anmeldenummer: 07803469.1
(22) Anmeldetag: 13.09.2007
(51) Int. Cl.: B60W 30/08

(54) **VERFAHREN UND VORRICHTUNG ZUM BETREIBEN EINES FAHRZEUGS MIT MINDESTENS EINEM FAHRASSISTENZSYSTEM**
METHOD AND APPARATUS FOR THE OPERATION OF A VEHICLE WITH AT LEAST ONE DRIVING ASSISTANCE SYSTEM
PROCÉDÉ ET DISPOSITIF POUR LE FONCTIONNEMENT D'UN VÉHICULE DOTÉ D'AU MOINS UN SYSTÈME D'ASSISTANCE AU CONDUCTEUR

(30) Priorität: 07.11.2006 DE 102006052481
(43) Veröffentlichungstag der Anmeldung: 19.08.2009
(73) Patentinhaber: Robert Bosch GmbH, 70442 Stuttgart (DE)
(72) Erfinder: STAEMPFLE, Martin, 71701 Schwieberdingen (DE); OECHSLE, Fred, 71642 Ludwigsburg (DE); SIMON, Andreas, 31135 Hildesheim (DE); BECKER, Jan-Carsten, 34246 Vellmar (DE); SCHMIDT, Christian, 70190 Stuttgart (DE); WITT, Katharina, 31180 Emmerke (DE)
(86) Internationale Anmeldenummer: PCT/EP2007/059654
(87) Internationale Veröffentlichungsnummer: WO 2008/055728

(56) Entgegenhaltungen:
- EP-A- 1 321 333
- DE-A1- 10 103 401
- DE-A1- 10 326 358
- DE-A1- 10 338 760
- DE-C1- 4 226 747

## Beschreibung

Die Erfindung betrifft ein Verfahren zum Betreiben eines Fahrzeugs, insbesondere eines Kraftfahrzeugs, das mindestens ein Fahrassistenzsystem aufweist.

### Stand der Technik

In modernen Fahrzeugen sind Fahrassistenzsysteme vorhanden, die den Fahrer bei der Führung des Fahrzeugs unterstützen, wobei zwischen Komfort- und Sicherheitssystemen unterschieden wird. So gibt es beispielsweise Fahrassistenzsysteme, die in eine Lenkung, eine Bremse und/oder die Drehzahl einer Verbrennungskraftmaschine eingreifen und dadurch zum Beispiel ein Ausbrechen aus einer Kurve oder ein zu dichtes Auffahren auf ein vorausfahrendes Fahrzeug verhindern. Derartige Fahrassistenzsysteme werden in zunehmendem Maße eingesetzt und basieren auf der Erfassung der Umgebung des Fahrzeugs durch sogenannte Umfeldsensorik. Auch sind Fahrassistenzsysteme bekannt, die den Fahrer in kritischen Fahrsituationen, zum Beispiel durch eine Notbremsung ohne Zutun des Fahrers, unterstützen.

Aus der Offenlegungsschrift DE 103 26 358 A1 ist eine Vorrichtung zur Fahrerwarnung und zur Anhaltewegverkürzung bekannt, die manuell vom Fahrer aktivierbar oder deaktivierbar ist und gegebenenfalls aktiv in die Fahrdynamik eingreift.

Aus der Offenlegungsschrift DE 103 38 760 A1 ist darüber hinaus ein Fahrzeug bekannt, das eine Sicherheitseinrichtung umfasst, die dann aktiviert wird, wenn eine Fahrzeugumgebungs-Erkennungseinrichtung ein potentielles Kollisionsobjekt ermittelt und gleichzeitig ein Fahrverhalten des Fahrers des Fahrzeugs erfasst wird, welches ebenfalls auf eine potentielle Kollision hindeutet. Weiterhin ist es aus der DE 42 26 747 C1 bereits bekannt, dem Fahrer eines Fahrzeugs einen Autopiloten zur Verfügung zu stellen, der die vollständige Kontrolle über das Fahrzeug übernimmt, wenn dies der Fahrer wünscht.

Ferner ist aus der Offenlegungsschrift DE 101 03 401 A bereits ein Fahrdynamikregelsystem bekannt, das mit einem Informations- und Warnsystem derart zusammenwirkt, dass wenn der Fahrer des Fahrzeugs nicht, nicht ausreichend oder falsch reagiert, ein automatischer Eingriff in die Fahrdynamik erfolgt, um eine Gefahrensituation abzuwenden.

### Offenbarung der Erfindung

Erfindungsgemäß ist vorgesehen, dass der Fahrer die Möglichkeit hat, in einer kritischen Fahrsituation das Fahrassistenzsystem zu aktivieren, und dass das Fahrassistenzsystem beim Aktivieren die Kontrolle über das Fahrzeugs ohne weiteres Zutun des Fahrers übernimmt. So kann der Fahrer, wenn er eine Fahrsituation für kritisch hält, entscheiden, ob er beispielsweise selbst durch ein Ausweichmanöver oder durch eine Notbremsung auf die Fahrsituation reagieren möchte, oder ob er die Führung des Fahrzeugs möglichst einem Assistenzsystem übergeben möchte, falls er der Ansicht ist, dass er die Fahrsituation nicht mehr selbst lösen beziehungsweise entschärfen kann. Der Fahrer hat also die Möglichkeit, die Führung des Fahrzeugs aktiv zu übergeben. Dies ist auch aus Rechts- und Haftungsgründen vorteilhaft.

Erfindungsgemäß ist das Fahrassistenzsystem durch den Fahrer nur dann aktivierbar, wenn gleichzeitig oder innerhalb eines vorgegebenen zeitlichen Intervalls auch mittels automatischer Erkennung eine kritische Fahrsituation ermittelt wird. Dadurch wird ein fehlerhaftes Auslösen beziehungsweise Aktivieren des Fahrassistenzsystems beziehungsweise eine ungewollte Übergabe der Kontrolle über das Fahrzeug an das Fahrassistenzsystem verhindert. Dabei kann beispielsweise durch eine vorhandene Umfeldsensorik, die beispielsweise Infrarot- und/oder Radarsensoren aufweist, eine kritische Fahrsituation automatisch erkannt werden. Erkennen also der Fahrer und die Umfeldsensorik eine kritische Fahrsituation, so kann der Fahrer das Fahrassistenzsystem aktivieren. Vorteilhafterweise wird dabei ein zeitliches Intervall vorgegeben, innerhalb dessen der Fahrer das Fahrassistenzsystem aktivieren kann. Das Zeitintervall beginnt beispielsweise in dem Moment, in dem eine kritische Fahrsituation automatisch erkannt wurde. Alternativ dazu kann das Zeitintervall auch zu dem Zeitpunkt beginnen, zu dem der Fahrer seinen Wunsch zur Aktivierung des Fahrerassistenzsystems erkennbar gemacht hat, sodass mit Beginn des Zeitintervalls die Umfeldsensorik beziehungsweise die automatische Fahrsituationserkennung aktiviert wird und innerhalb des vorgegebenen Zeitintervalls bestätigt oder nicht bestätigt, ob die Fahrsituation kritisch ist.

Erfindungsgemäß erfolgt die Aktivierung des Fahrassistenzsystems durch den Fahrer mittels Sprache. Dies hat den Vorteil, dass der Fahrer zum Aktivieren des Fahrassistenzsystems seine Hände nicht von dem Lenkrad des Fahrzeugs nehmen oder seinen Blick von der Straße abwenden muss, wodurch er weiterhin einen Überblick über die Fahrsituation und die Kontrolle über das Fahrzeug bis zur Aktivierung des Fahrassistenzsystems behält.

Vorteilhafterweise erfolgt die Aktivierung durch den Fahrer mittels mindestens eines bestimmten Wortes. Dieses muss dem Fahrer natürlich bekannt und möglichst umkompliziert sein, sodass der Fahrer schnell reagieren kann. Erfindungsgemäß kann die Aktivierung durch den Fahrer ebenfalls mittels mehreren gesprochenen Wörtern in Form eines Satzes erfolgen.

Erfindungsgemäß erfolgt die Aktivierung durch den Fahrer alternativ manuell oder sie muss zusätzlich zur Sprache/zum Wort manuell erfolgen. Der Fahrer hat also die Möglichkeit durch beispielsweise Drücken einer Taste oder eines Schalters das Fahrassistenzsystem zu aktivieren. Wobei vorteilhafterweise die manuelle Aktivierung des Fahrassistenzsystems als zusätzliche Bedingung zur Sprache/zum Wort und/oder zur automatischen Erkennung einer kritischen Fahrsituation erfolgen muss, sodass das Fahrassistenzsystem die Kontrolle über das Fahrzeug nur dann übernimmt, wenn beispielsweise sämtliche Bedingungen, also Sprache/Wort, erkannte kritische Fahrsituation durch die automatische Erkennung und manuelle Aktivierung, erfüllt sind.

Nach einer Weiterbildung der Erfindung erfolgt eine Stimmerkennung zur Identifizierung des Fahrers und/oder der Sprache des Fahrers und/oder des bestimmten mindestens einen Wortes des Fahrers. Dazu muss der Fahrer zweckmäßigerweise bei der Einrichtung des Fahrassistenzsystems eine Stimmprobe an das Fahrassistenzsystem abgeben, sodass dieses nur dann aktivierbar ist, wenn der Fahrer identifiziert wird. Dadurch wird verhindert, dass beispielsweise ein Beifahrer das Fahrassistenzsystem aktivieren kann. Vorzugweise identifiziert die Stimmerkennung das bestimmte mindestens eine Wort des Fahrers, wobei dieser bei der Abgabe der Stimmprobe dieses mindestens eine Wort dem Fahrassistenzsystem vorgibt beziehungsweise in diesem "hinterlegt". Vorteilhafterweise kann der Fahrer durch Betätigen einer Taste die Stimmerkennung aktivieren, welche im Anschluss die Sprache des Fahrers beziehungsweise sein gesprochenes Wort identifiziert.

Ferner betrifft die Erfindung eine Vorrichtung zum Betreiben eines Fahrzeugs, insbesondere eines Kraftfahrzeugs, das mindestens ein Fahrassistenzsystem aufweist, wobei mindestens eine vom Fahrer aktivierbare Betätigungseinrichtung vorgesehen ist, die bei Aktivierung das Fahrassistenzsystem zur Übernahme der Kontrolle des Fahrzeugs, insbesondere in kritischen Fahrsituationen, einschaltet. Die Vorrichtung zeichnet sich durch die Merkmale des Anspruchs 6 aus, wobei vorgesehen ist, dass das Fahrerassistenzsystem nur dann aktiviert wird, wenn eine Umfeldsensorik des Fahrzeugs die aktuelle Fahrsituation als kritisch bewertet.

Erfindungsgemäß weist die Betätigungseinrichtung mindestens einen Schalter und/oder einen Taster auf, der durch manuelle Betätigung des Fahrers betätigt werden kann. Vorteilhafterweise ist der Schalter beziehungsweise der Taster in dem Fahrzeug derart angeordnet, dass der Fahrer diesen leicht erreichen und zum anderen schnell finden kann, sodass der Fahrer schnell auf die Fahrsituation reagieren beziehungsweise das Fahrassistenzsystem aktivieren kann.

Erfindungsgemäß weist die Betätigungseinrichtung alternativ oder zusätzlich mindestens eine Stimmerkennungseinrichtung auf, die den Fahrer und/oder die Sprache und/oder mindestens ein bestimmtes gesprochenes Wort des Fahrers, wie oben beschrieben, identifizieren kann. Zweckmäßigerweise weist die Stimmerkennungseinrichtung mindestens ein Mikrofon auf, welches in der Nähe des Fahrers im Fahrzeug angeordnet ist.

### Kurze Beschreibung der Zeichnungen

Im Folgenden soll die Erfindung anhand einiger Figuren näher erläutert werden. Dazu zeigen im Folgenden
- Figur 1: ein erstes Ausführungsbeispiel des erfindungsgemäßen Verfahrens,
- Figur 2: ein zweites Ausführungsbeispiel des erfindungsgemäßen Verfahrens und
- Figur 3: ein Ausführungsbeispiel für eine erfindungsgemäße Vorrichtung.

### Ausführungsform(en) der Erfindung

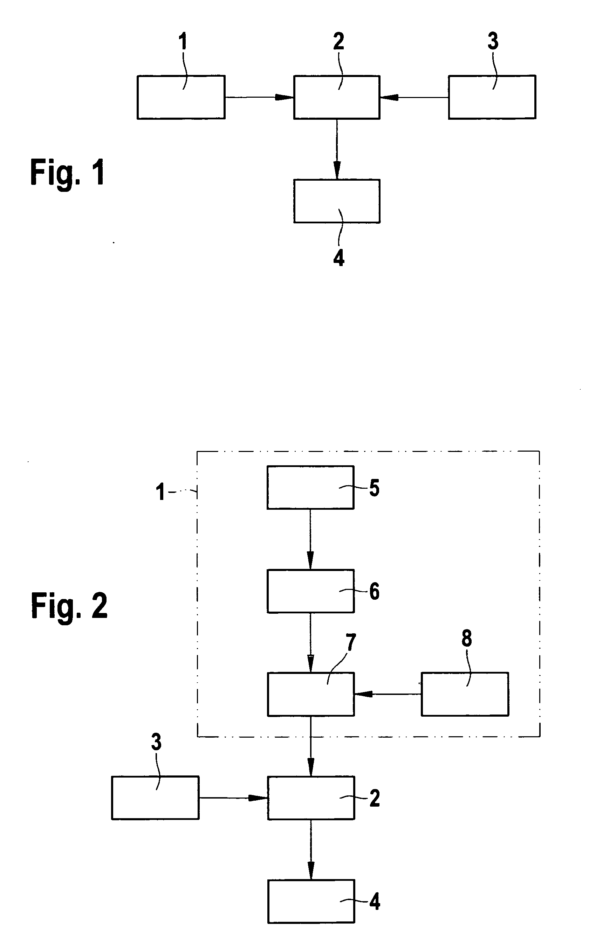

Die Figur 1 zeigt in einem Blockschaltbild ein erstes Ausführungsbeispiel des erfindungsgemäßen Verfahrens. Dabei gibt der Fahrer in einer kritischen Fahrsituation in einem ersten Schritt 1 einen Befehl, manuell oder akustisch, zur Aktivierung eines Fahrassistenzsystems, welches die Kontrolle über das Fahrzeug übernehmen soll. In einem zweiten Schritt 2 wird überprüft, ob auch eine zum Fahrzeug gehörende Umfeldsensorik 3, die beispielsweise mittels übernimmt. Dadurch gibt der Fahrer dem Fahrzeug den Befehl die kritische Fahrsituation selbst zu lösen beziehungsweise zu entschärfen. Schritt 1 und Schritt 2 des Verfahrens können, müssen aber nicht, gleichzeitig erfolgen. Vorteilhafterweise erfolgt die Aktivierung des Fahrassistenzsystems im Schritt 4, wenn der Fahrer und das Fahrassistenzsystem innerhalb eines vorgegebenen zeitlichen Intervalls die Fahrsituation als kritisch erkennen beziehungsweise der Fahrer den Befehl zur Aktivierung des Fahrassistenzsystems gibt und die Umfeldsensorik die Fahrsituation als kritisch bewertet hat.

Durch die aktive Übergabe der Kontrolle über das Fahrzeug an das Fahrassistenzsystem ist der Fahrer in der Lage die Kontroll-Übergabe explizit zu äußern, wenn er der Ansicht ist, dass er die kritische Situation nicht selbst lösen kann. Darüber hinaus übernimmt das Fahrassistenzsystem nicht die Kontrolle über das Fahrzeug, wenn der Fahrer der Ansicht ist, dass er selbst beispielsweise durch ein Ausweichmanöver oder eine Notbremsung die Fahrsituation lösen beziehungsweise entschärfen möchte.

Die Figur 2 zeigt ein zweites Ausfiihrungsbeispiel des vorteilhaften Verfahrens ebenfalls in einem Blockschaltbild, wobei das zweite Ausführungsbeispiel eine Erweiterung des ersten Ausfiihrungsbeispiels darstellt. Dabei ist der erste Schritt 1, hier als gestrichelt umrandetes Kästchen dargestellt, in mehrere Zwischenschritte unterteilt. In einem ersten Zwischenschritt 5 gibt der Fahrer zunächst manuell, beispielsweise durch Betätigen eines Schalters oder Tasters, einen Befehl zum Aktivieren des Fahrassistenzsystems. Dabei wird eine Stimmerkennungseinrichtung aktiviert. Im zweiten Zwischenschritt 6 gibt der Fahrer einen akustischen Befehl, beispielsweise durch ein gesprochenes Wort oder einen gesprochenen Satz, zum Aktivieren des Fahrassistenzsystems, welcher von der Stimmerkennungseinrichtung erfasst wird. In einem dritten Zwischenschritt 7 wird der akustische Befehl des Fahrers mit einer Stimmprobe 8, die der Fahrer bei der Einrichtung des Fahrassistenzsystems abgegeben beziehungsweise hinterlegt/gespeichert hat, verglichen. Vorteilhafterweise hat der Fahrer dabei das Wort oder den Satz zum Aktivieren des Fahrassistenzsystems hinterlegt. Dies hat den Vorteil, dass eine Auslösung beziehungsweise Aktivierung des Fahrassistenzsystems durch eine andere Person verhindert wird. Mittels der Zwischenschritte 5 bis 7 gibt der Fahrer seinen Wunsch zum Aktivieren des Fahrassistenzsystems gemäß dem Schritt 1 an. Anschließend wird, wie in dem ersten Ausführungsbeispiel der Figur 1, überprüft, ob auch die Umfeldsensorik 3 die Fahrsituation als kritisch bewertet, wonach dementsprechend das Fahrassistenzsystem im vierten Schritt aktiviert oder nicht aktiviert wird.

Die Aktivierung der Stimmerkennungseinrichtung im Zwischenschritt 5 kann alternativ auch dadurch geschehen, dass die Umfeldsensorik 3 eine kritische Fahrsituation erkennt, oder ganz wegfallen, sodass die Stimmerkennungseinrichtung stets aktiviert ist.

Vorteilhafterweise wird die Stimmerkennungseinrichtung automatisch aktiviert, wenn die Umfeldsensorik 3 eine kritische Fahrsituation erkennt.

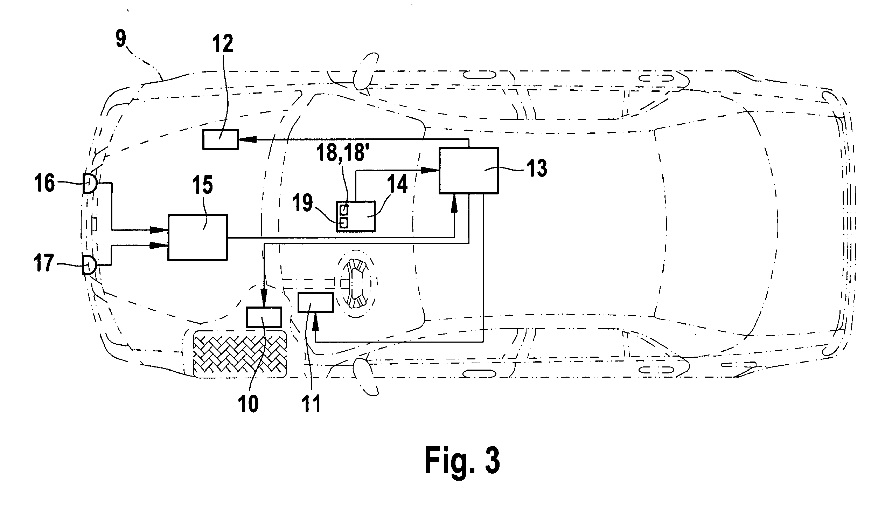

Die Figur 3 zeigt ein Ausführungsbeispiel einer vorteilhaften Vorrichtung zum Betreiben eines Fahrzeugs 9, welches mehrere Fahrassistenzsysteme 10, 11 und 12 aufweist. Die Fahrassistenzsysteme 10 bis 12 sind beispielsweise derartig ausgebildet, dass das Fahrassistenzsystem 10 Einfluss auf die Bremsen des Fahrzeugs 9 hat, das Fahrassistenzsystem 11 die Lenkung des Fahrzeugs 9 und das Fahrassistenzsystem 12 die Drehzahl der Verbrennungskraftmaschine des Fahrzeugs 9 beeinflussen kann. Die Fahrassistenzsysteme 10 bis 12 sind dabei mit einer Steuereinheit 13 des Fahrzeugs 9 verbunden. Ebenfalls sind eine Betätigungseinrichtung 14 und eine Umfeldsensorik 15 mit der Steuereinheit 13 verbunden. Die Umfeldsensorik 15 erfasst die aktuelle Fahrsituation des Fahrzeugs 9 beispielsweise mittels Infrarotsensoren 16 und/oder Radarsensoren 17 und bewertet die erfassten Daten. Der Fahrer hat die Möglichkeit über die Betätigungseinrichtung 14 der Steuereinheit 13 einen Befehl zur Aktivierung des Fahrassistenzsysteme 10 bis 12 zu geben. Die Steuereinheit 13 aktiviert die Fahrassistenzsysteme 10 bis 12 vorteilhafterweise nur dann, wenn die Umfeldsensorik 15 die aktuelle Fahrsituation als kritisch bewertet. Die Betätigungseinrichtung 14 weist vorteilhafterweise einen Schalter 18 oder Taster 18' und/oder eine Stimmerkennungseinrichtung 19 auf, die wie oben beschrieben verwendet werden. Die Betätigungseinrichtung 14 ist dabei vorteilhafterweise so in dem Fahrzeug angeordnet, dass der Fahrer den Schalter 18 beziehungsweise Taster 18' leicht und schnell erreichen und die Stimmerkennungseinrichtung 19 die Stimme des Fahrers gut erfassen kann.

## Patentansprüche

1. Verfahren zum Betreiben eines Fahrzeugs, insbesondere eines Kraftfahrzeugs, das mindestens ein Fahrassistenzsystem aufweist, wobei der Fahrer die Möglichkeit hat, in einer kritischen Fahrsituation aktiv das Fahrassistenzsystem zu aktivieren, wobei das Fahrassistenzsystem beim Aktivieren die Kontrolle über das Fahrzeug ohne weiteres Zutun des Fahrers übernimmt, **dadurch gekennzeichnet, dass** das Fahrassistenzsystem durch den Fahrer nur dann aktivierbar ist, wenn gleichzeitig oder innerhalb eines vorgegebenen zeitlichen Intervalls auch mittels automatischer Erkennung eine kritische Fahrsituation ermittelt wird, und dass die Aktivierung durch den Fahrer mittels Sprache und/oder manuell erfolgt.

2. Verfahren nach Anspruch 1, **dadurch gekennzeichnet, dass** die Aktivierung durch den Fahrer mittels mindestens eines bestimmten Wortes erfolgt.

3. Verfahren nach einem der vorhergehenden Ansprüche, **dadurch gekennzeichnet, dass** die Aktivierung durch den Fahrer zusätzlich zur Sprache manuell erfolgen muss.

4. Verfahren nach einem der vorhergehenden Ansprüche, **dadurch gekennzeichnet, dass** eine Stimmerkennung zur Identifizierung des Fahrers und/oder der Sprache des Fahrers und/oder des bestimmten mindestens einen Wortes des Fahrers erfolgt.

5. Verfahren nach einem der vorhergehenden Ansprüche, **dadurch gekennzeichnet, dass** die Stimmerkennung aktiviert wird, wenn mittels der automatischen Erkennung eine kritische Fahrsituation ermittelt worden ist.

6. Vorrichtung zum Betreiben eines Fahrzeugs, insbesondere eines Kraftfahrzeugs, das mindestens ein Fahrassistenzsystem und mindestens eine vom Fahrer aktiv aktivierbare Betätigungseinrichtung (14) aufweist, wobei die Betätigungseinrichtung (14) bei Aktivierung das Fahrassistenzsystem (10,11,12) zur Übernahme der Kontrolle des Fahrzeugs (9), einschaltet, **dadurch gekennzeichnet, dass** die Betätigungseinrichtung (14) mindestens einen Schalter (18) und/oder Taster (18') zur manuellen Aktivierung und/oder mindestens eine Stimmerkennungseinrichtung (19) zur Aktivierung mittels Sprache aufweist, wobei das Fahrerassistenzsystem (10,11,12) nur dann aktiviert wird, wenn eine Umfeldsensorik (2,15) des Fahrzeugs die aktuelle Fahrsituation als kritisch bewertet.

## Claims

1. Method for operating a vehicle, in particular a motor vehicle, which has at least one driving assistance system, wherein the driver has the possibility of activating the driving assistance system actively in a critical driving situation, wherein the driving assistance system, when activated, readily assumes control of the vehicle without further action by the driver, **characterized in that** the driving assistance system can be activated by the driver only if at the same time or within a predefined time interval a critical driving situation is also determined by means of automatic detection, and **in that** the activation is carried out by the driver by voice and/or manually.

2. Method according to Claim 1, **characterized in that** the activation by the driver is carried out by means of at least one specific word.

3. Method according to one of the preceding claims, **characterized in that** in addition to voice, the activation by the driver also has to take place manually.

4. Method according to one of the preceding claims, **characterized in that** voice recognition takes place in order to identify the driver and/or the driver's speech and/or the driver's at least one specific word.

5. Method according to one of the preceding claims, **characterized in that** the voice recognition system is activated if a critical driving situation has been determined by means of the automatic detection system.

6. Apparatus for operating a vehicle, in particular a motor vehicle, which has at least one driving assistance system and at least one activation device (14) which can be activated actively by the driver, wherein the activation device (14), when activated, switches on the driving assistance system (10, 11, 12) in order to assume control of the vehicle (9), **characterized in that** the activation device (14) has at least one switch (18) and/or pushbutton key (18') for performing manual activation and/or at least one voice recognition device (19) for performing activation by means of speech, wherein the driving assistance system (10, 11, 12) is activated only when a surroundings sensor system (2, 15) of the vehicle evaluates the current driving situation as critical.

## Revendications

1. Procédé d'utilisation d'un véhicule, notamment d'un véhicule automobile, qui présente au moins un système d'assistance au conducteur, le conducteur ayant la possibilité d'activer activement le système d'assistance au conducteur dans une situation de conduite critique, le système d'assistance au conducteur, lors de son activation, prenant le contrôle du véhicule sans action supplémentaire du conducteur, **caractérisé en ce que** le système d'assistance au conducteur ne peut être activé par le conducteur que si une situation de conduite critique est déterminée simultanément ou à l'intérieur d'un intervalle de temps prédéfini, également par détection automatique, et **en ce que** l'activation par le conducteur s'effectue par la parole et/ou manuellement.

2. Procédé selon la revendication 1, **caractérisé en ce que** l'activation par le conducteur s'effectue au moyen d'au moins un mot défini.

3. Procédé selon l'une des revendications précédentes, **caractérisé en ce que** l'activation par le conducteur doit s'effectuer manuellement en plus de la parole.

4. Procédé selon l'une des revendications précédentes, **caractérisé en ce qu'**une reconnaissance vocale est effectuée pour identifier le conducteur et/ou la langue du conducteur et/ou au moins un mot du conducteur déterminé.

5. Procédé selon l'une des revendications précédentes, **caractérisé en ce que** la reconnaissance vocale est activée lorsqu'une situation de conduite critique a été déterminée au moyen de la détection automatique.

6. Dispositif d'utilisation d'un véhicule, notamment d'un véhicule automobile, qui présente au moins un système d'assistance au conducteur et au moins un dispositif d'actionnement (14) pouvant être activé activement par le conducteur, le dispositif d'actionnement (14), lors de son activation, mettant en circuit le système d'assistance au conducteur (10, 11, 12) pour prendre le contrôle du véhicule (9), **caractérisé en ce que** le dispositif d'actionnement (14) présente au moins un commutateur (18) et/ou une touche (18') pour l'activation manuelle et/ou au moins un dispositif de reconnaissance vocale (19) pour l'activation au moyen de la parole, le système d'assistance au conducteur (10, 11, 12) n'étant activé que si un dispositif de détection de l'environnement (2, 15) du véhicule évalue la situation de conduite actuelle comme étant critique.
